# EUROPEAN PATENT APPLICATION

(11) **EP 3 096 322 A1**
(43) Date of publication of application: **23.11.2016**
(21) Application number: 15305779.9
(22) Date of filing: 22.05.2015
(51) Int. Cl.: G11B 27/031, H04N 21/41

(54) **SYSTEM AND METHOD FOR EDITING IMAGE INFORMATION USING USER EMOTIONS ASSOCIATED WITH THE IMAGE INFORMATION**

(71) Applicant: Thomson Licensing, 92130 Issy-les-Moulineaux (FR)
(72) Inventor: Allie, Valérie, 35576 Cesson-Sévigné (FR); Guillotel, Philippe, 35576 Cesson-Sévigné (FR); Fleureau, Julien, 35576 Cesson-Sévigné (FR); Florent, Teddy, 92443 Issy-Les-Moulineaux (FR)
(74) Representative: Huchet, Anne

(57) **Abstract**

Image information 204, 316 is automatically edited based on levels of emotions obtained from a user 202, 302 watching the image information. A sensor 116, 206, 304 on or near a user transmits physiological information to a system 102, 200, 306 as the user watches the image information. The physiological information is then processed 108 to determine what levels of emotions the user is experiencing as they watch the image information. An image information editor 210 utilizes the levels of emotions to determine which parts of the image information form a 'best moments' subset of the image information 212. The subset of the image information 212 can then be viewed or shared via other communication means.

## Description

### TECHNICAL DOMAIN

The present principles relate to a system and a method for editing image information, and more particularly, to a system and a method for editing image information based on a user's emotions associated with the image information.

### BACKGROUND

Multimedia content such as songs, videos, movies and coverage of sporting events and the like can elicit emotional responses from watchers during different segments of the content. Since the multimedia content can last for substantial amounts of time, often hours, it becomes desirable to edit the content to a shorter duration, including only the highlights or most interesting parts for a particular user. These highlighted segments can then be shared with a user's social network and the like. This is typically done by having the user mark which segments of the multimedia content they like, which can take a great amount of effort. Some automated processes review the multimedia content for busier segments or loud sound events, etc. to determine which segments to highlight. However, this type of process is not very accurate and quite often one user will react differently to a segment of the multimedia content than another user. In other words, what frightens one user, might not scare another.

### SUMMARY

Physiological sensors are used to facilitate in determining a user's emotional state while viewing image information such as, for example, movies, videos, theatrics and the like. The physiological data is used to determine what emotions the user was experiencing when watching certain segments of the image information. These segments are then compiled into a shorter version of the image information and viewed and/or shared, for example, with a user's social network. The physiological sensors can be integrated into wearable items such as, for example, a ring and/or a wristband and the like. This allows one to integrate emotions into content editing and sharing, enriching emotion quantification with multiple sensing information integration and cross correlation with audio and video moments of interest.

According to an embodiment of the present principles, a system for editing image information can comprise a means for receiving and determining such as an analyzer that receives physiological information associated with a user viewing image information and determines at least one level of emotion from the physiological information; and a means for selecting such as an editor that automatically selects at least one image from the image information based on an emotion level to create a subset of the image information for viewing.

Another embodiment of the system includes a means for synchronizing/correlating such as a synchronizer that correlates the physiological information with the image information. The synchronizer can also correlate the physiological information to the image information using audio information recorded with the physiological information. The synchronizer can also correlate the physiological information by correlating an audio track associated with the image information to the audio information recorded with the physiological information.

In yet another embodiment of the system, it includes a means for obtaining physiological information such as with a sensor that receives physiological information from a user viewing the image information, wherein the sensor communicates the physiological information to the analyzer in real time or at a subsequent time. The sensor can also include at least one selected from the group of a galvanic skin response sensor and a photoplethysmogram sensor. The sensor can also be a mobile device with physiological data recording and audio recording capabilities that allows subsequent synchronization and emotion level determination.

In another embodiment, the subset of image information can be transmitted to a social network.

According to an embodiment of the present principles, a method for editing image information comprises receiving physiological information from a user viewing the image information, determining at least one level of emotion from the physiological information and automatically selecting at least one image from the image information based on an emotion level to create a subset of the image information for viewing. The method can further comprise synchronizing the physiological information with the image information. The synchronizing of the physiological information to the image information can be accomplished using audio information recorded with the physiological information. The synchronizing of the physiological information can be accomplished by synchronizing an audio track associated with the image information to the audio information recorded with the physiological information. The physiological information can be at least one selected from the group of a galvanic skin response data and a photoplethysmogram data. The physiological information can also be received wirelessly. Further embodiments can include transmitting the subset of image information to a social network.

The above presents a simplified summary of the subject matter in order to provide a basic understanding of some aspects of subject matter embodiments. This summary is not an extensive overview of the subject matter. It is not intended to identify key/critical elements of the embodiments or to delineate the scope of the subject matter. Its sole purpose is to present some concepts of the subject matter in a simplified form as a prelude to the more detailed description that is presented later.

To the accomplishment of the foregoing and related ends, certain illustrative aspects of embodiments are described herein in connection with the following description and the annexed drawings. These aspects are indicative, however, of but a few of the various ways in which the principles of the subject matter can be employed, and the subject matter is intended to include all such aspects and their equivalents. Other advantages and novel features of the subject matter can become apparent from the following detailed description when considered in conjunction with the drawings.

### BRIEF DESCRIPTION OF THE DRAWINGS

FIG. 1 depicts an example image capturing device in accordance with an embodiment of the present principles.
FIG. 2 depicts an example system for editing image information in accordance with an embodiment of the present principles.
FIG. 3 depicts an example use of a system for editing image information in accordance with an embodiment of the present principles.
FIG. 4 depicts a flow diagram of a method of editing image information in accordance with an embodiment of the present principles.

### DETAILED DESCRIPTION

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details. In other instances, well-known structures and devices are shown in block diagram form in order to facilitate describing the embodiments.

The emotions of a user are taken into account in order to identify the temporal events in terms of emotion, for either recording those emotions in synchronization with multimedia content (e.g., an audio and/or visual stream) and/or process the "best moments" of recorded or viewed multimedia content based on the emotion. The present principles can be extended to any electronic device usage in order to detect/identify/classify user behavior.

In one embodiment, a galvanic skin response (GSR) sensor is utilized to detect physiological changes in a user as image information is recorded. Image information can be obtained from a static image such as a photograph and the like and/or from dynamic images such as from a video and/or movie and the like. The GSR sensor can come in many forms that permit comfortable usage by a user under test. This can include, but is not limited to, wearable devices such as a ring and/or a wristband and the like. They can also include devices that are adhered to the body and/or devices that are embedded into clothing and the like. These devices can include wired and/or wireless interfaces that permit acquired data to be transmitted to another device or devices. The sensors can include abilities beyond GSR capabilities including, but not limited to, heart rate and/or blood pressure and the like from photoplethysmogram sensors, etc.. The sensors can be individual sensors and/or a single sensor device with capabilities to detect several different types of user data.

The use of multiple types of sensors allows for further discrimination as to what type of emotion a user is experiencing at a particular moment of viewing the image information. The sensor or sensors can gather data about the user as they are viewing a pre-recorded and/or a live recording event. When the image information is pre-recorded, the user's physiological information can be synchronized with the playback of the recorded event. If the user is watching a live event that is being recorded, the user is actually watching the live event and not a playback of a recorded event. The user's emotions while watching the live event can still be synchronized with the live event while it is being recorded and/or at a later time. Thus, the present principles allow the user themselves (or someone else or something else) to record the live event while also capturing their own emotions as the event is being recorded.

As stated above, the physiological information and the image information can be synchronized at the time of recording, at the time of playback and/or at a subsequent time. This flexibility allows a user to easily capture information and process it when time allows or when access to greater processing capability is available. For example, a user can put on a GSR ring device that possesses physiological data storage and audio recording capabilities for subsequent synchronization, watch a movie or several movies on a device that they do not own and/or in a movie theater and the like and then download the stored information at a later time on their own device and the like. This gives users greater flexibility and allows them to enjoy the viewing experience while still capturing their emotions. In another example, the user can wear a sensor or sensors in a classroom setting where a lecture is being recorded. Typically, a user's reactions will be more realistic the first time an event occurs. Thus, their emotional state is generally better captured the first time they sit through the lecture. If they watch the recorded version of the lecture, their emotional reaction might not be as strong as during the live event. Thus, they can record their initial emotions and synchronize them later with the recorded version of the lecture.

The processing in one embodiment of the present principles can include, but is not limited to, four stages. One skilled in the art can appreciate that the order of the stages is not necessarily sequential for all possible scenarios. Likewise, not all stages may be required for all possible scenarios. The first stage being the capture of physical signals and/or data (physiological information) and the quantification of the emotions felt by the user. The second stage being the synchronization of the emotional information (e.g., an emotion 'track') with the image information (e.g., the audio 'track' and/or the video 'track,' etc.). The third stage can be the integration and/or storage of the emotion information within the image information in the form of metadata. The emotion information can also be synchronized and stored apart from the image information. The fourth stage is rendering a 'Best Moments' version of the image information for playback and/or sharing (e.g., social network sharing). The Best Moments version can contain, for example, moments of joy and/or laughter and the like. If the image information is related to a horror movie, for example, the Best Moments might include moments of terror and/or disgust and the like. The selection of the criteria used to compile the Best Moments can be influenced by a user and/or automatically ascertained (e.g., device interprets the image information to contain scary content and therefore horror related emotions are considered the 'Best Moments,' etc.)

One embodiment of the first stage of capturing physiological information and determining the emotions felt by the user includes employing a primary sensor that is a GSR sensor. A good location for such a sensor is on a finger. One example in accordance with the present principles is to create a GSR sensor in the form of a GSR ring. The GSR ring is a wired/wireless connected ring device integrating, for example but not limited to, the following features - a GSR sensor and a short distance wireless communication module like Bluetooth, Bluetooth Low Energy, and/or Zigbee and the like. Other variants can have wired communication means and/or use inductive coupling and the like.

Galvanic skin response (GSR) is an indicator of skin conductance (SC), and it increases linearly with a user's level of overall arousal (e.g., happiness, sadness, etc.). Electromyography (EMG) measures muscle activity and has been shown to correlate with negatively valenced emotions (e.g., anger, hatred, etc.). With a GSR ring, only arousal information is captured which will give a "level" of emotion rather than a classification of the emotion. Thus, in some examples, in order to filter the GSR sensor signal from false detections or interpretations, another embodiment of stage one consists of using a secondary sensing device like a wristband and the like in order to capture other physiological information.

One example of such device is a Withings Pulse Ox (http://www.withings.com/fr/). In such a case, additional information such as heart rate and/or temperature are recorded. This type of physiological information is used to emphasize/increase robustness of the GSR signal information. In this scenario, the heart rate is linked to the emotions and correlated with the GSR. Thus, by using both signals, the final event detection is more robust. Temperature can be less relevant especially due to its low evolution rate. However, it can also be used to filter out a bad detection on a long time frame. The wristband type of sensor can also include 'smart watches' that include sensors for monitoring physical information of a wearer. In addition, sensors such as temperature and/or plethysmography can be added to the ring directly.

Another embodiment of stage one is to couple the previous information track with state of the art image information analysis techniques in order to identify moments of interest within the content. Moments of interest can include, but are not limited to, action sequences (e.g., explosions, fights, etc.) and the like and/or plot highlights in a movie, etc. Then GSR sensor information is used to transform moments of interest into a user's best moments or moments of high emotion intensity/levels. This embodiment can be also applied later at stage four of the process.

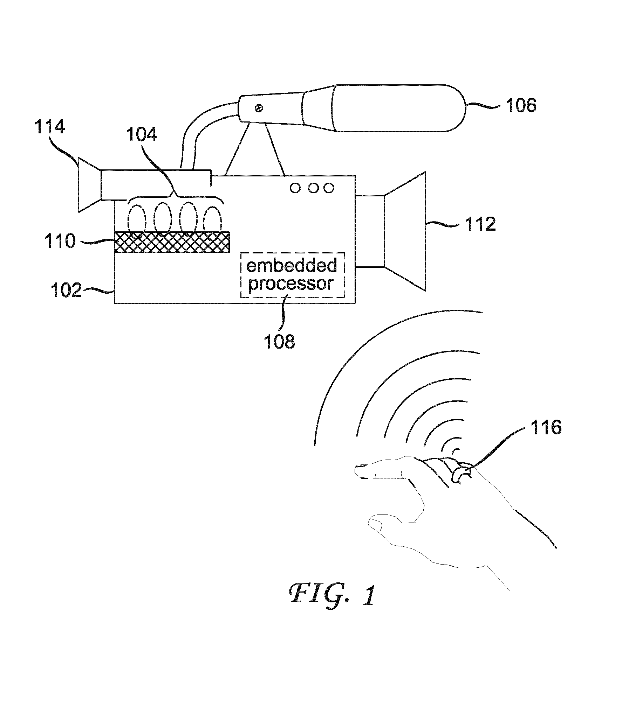

In one embodiment of stage two of the process for synchronization of the emotion information with the image information, an image capturing system 100 utilizing an image capturing device 102, illustrated in FIG. 1, is used as an image information recording device. The image capturing device 102 typically includes an eyepiece 114 or screen (not shown) for viewing what is being recorded. It 102 also includes a lens 112 and some form of audio recording system 106 such as a microphone (internal and/or external). The image capturing device 102 is modified in order to integrate a local GSR sensing capture system including embedded sensor points 104. Note that with a typical device 102, a user's fingers are inserted under a strap 110 and touch the image capturing device 102 at four points (one point for each finger). A local GSR sensor can be embedded into the image capturing device 102 at one or more of these points. In other embodiments, the GSR sensing capture system includes a communication interface (wired and/or wireless communications) to get information directly from a remote GSR sensor 116 (e.g., GSR ring) and/or other sensors; and a processor 108 in charge of GSR and/or other sensor signal processing. The processor 108 can include local and/or remote data storage (memory) for storing physiological data associated with a recording (e.g., data received from local and/or remote sensors). This processor 108 is synchronized with a recording device within the image capturing device. This embodiment also applies when the image capturing device is a mobile device (e.g., a PDA, tablet and/or smartphone, etc.). In the case of multiple sensing devices, (e.g., a ring and a wristband), both devices can communicate with the image capturing device (in the above scenarios, a video camera or mobile device) and the associated processor can process the various physiological signals.

Another embodiment of stage two is considered when the image information recording device is different from the sensing (physiological information) recording device. For instance when a video recording device is an off-the-shelf video camera and a sensing recording device is a mobile device. In this scenario, two options can be considered. The first option is to consider if there is a microphone on any sensing device (e.g., a ring and/or a wristband/watch, etc.). Then, for example, a mobile device can recover any sensor signals - including, but not limited to, the image information coming from a video camera and the sensing and audio recording coming from the sensing devices. Using, for example, off-the-shelf audio based content synchronization will allow synchronization of the image information with the sensing recording. The second option consists of using only a mobile device microphone for audio recording and synchronization. In this scenario, the mobile device can record simultaneously the emotion information (emotion track) and an audio track and then apply audio based synchronization with audio and/or visual track recorded by a camera. An alternative can be that one of the devices sends a specific audio signal that all devices record. In the post-processing stages, it can be easy to recover this pattern and synchronize all the devices. Another alternative can be that a wristband is embedded with sufficient processing power to control an audio/visual recorder and communicate with a sensing device (e.g., ring, etc.).

In one embodiment of stage three of integration/storage of the emotion information with the image information in the form of metadata, metadata standards and/or proprietary metadata are used in order to associate an emotion value for a photograph, scene, shot and/or frame level. Emotion value at a segment of the image information such as, for example, a scene and/or shot scale is alternatively the mean value of the value for each frame or a more complex computation of value for each frames. An example of metadata for each time frame is an intensity level defined with four bits (16 levels) and four bits for a type of emotion, leading to an eight bit metadata value. It can be inserted into an Advanced Video Coding (AVC) video stream using a dedicated Supplemental enhancement Information (SEI) message for example. It can also be inserted into a MP4 (Motion Pictures Experts Group, MPEG-4) file and/or any stream/file using an appropriate proprietary data field provided.

In one embodiment of stage four of rendering a 'Best Moments" version of the multimedia content for playback and/or sharing, the emotion based content editing is accomplished by selecting segments of the image information (e.g., shots, scenes, frames, photographs) ranked by level of emotion according to the duration of the edited image information. For instance, the highest emotional scenes can be used, and/or the events corresponding to a dedicated type of emotion (assuming this information is available), such as humorous scenes (e.g. scene with "joy"). Other embodiments of stage four include analyzing audio and video tracks and extracting moments of interest in the image information, then ranking those moments of interest segments according to the emotion information and select them according to the duration of the edited image information. It can also be a way to recommend scenes/movies to a user's social network by ranking the scenes with the emotion. A user's friends can select the one with the highest emotion intensity.

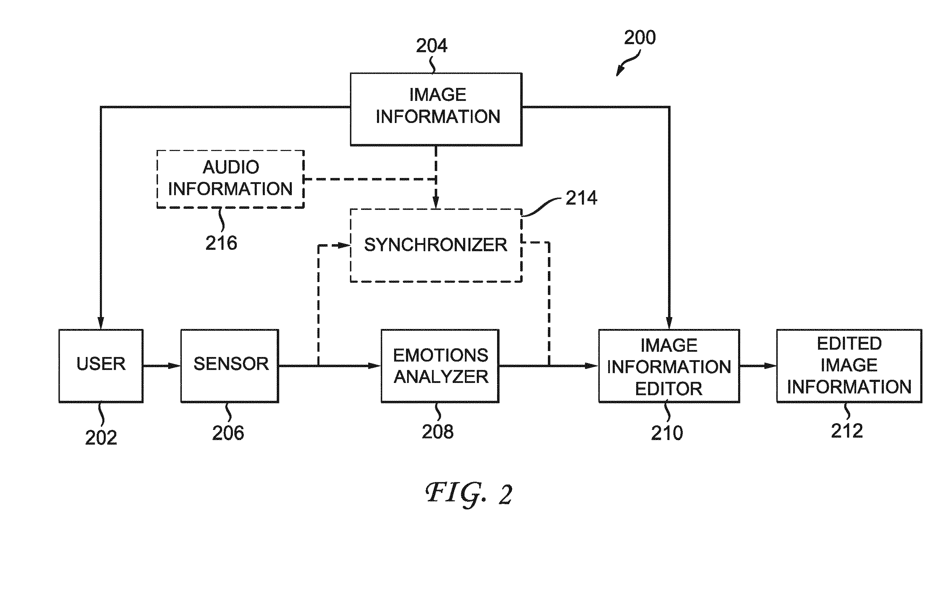

FIG. 2 depicts an example system 200 for editing image information in accordance with an embodiment of the present principles. A user 202 is viewing image information 204. As noted above, the image information 204 can be static (e.g., photograph, frames of a video, etc.) and/or dynamic (e.g., movie, video, etc.) in nature. A sensor 206 receives physiological information from the user 202 as they view the image information 204. The sensor 206 can be implemented as multiple sensing devices, each sensing different types of physiological information about the user 202 as they view the image information 204. Sensors can be rings, necklaces, glasses, wristbands, adhered devices, devices embedded in clothing and/or integrated into other devices such as, for example, watches, video cameras and/or mobile devices and the like.

The received physiological information is analyzed by an emotions analyzer 208 to determine emotional levels and/or events associated with the user 202 viewing the image information 204. An image information editor 210 employs the determined emotion information to create an edited image information 212. The edited image information 212 is a subset of the image information 204 and contains a 'Best Moments' of the image information 212 in the perspective of the user 202. The image information editor 210 can automatically determine which level and/or type of emotions are to be used for creating the edited image information 212 and/or it can receive user and/or system input to determine which emotions to use. As noted above, the image information 204 can be used as well to determine which level or type of emotion is used by the image information editor 210. In this example, it is assumed that the image information editor 210 receives the level and/or type of emotion from the emotions analyzer 108 in sync with the image information 204.

However, in other examples, this may not be the case. For those instances, an optional synchronizer 214 can be utilized to synchronize the physiological information from the sensor 206 with the image information 204. This allows the image information editor 210 to synchronize the emotions with the image information 204 at a subsequent time from when the physiological information was captured from the user 202. One embodiment to achieve the synchronization is for the synchronizer 214 to use optional audio information 216 that is associated with the image information 204. The audio information 216 can be from a microphone that records the audio information 216 as the user 202 is viewing the image information 204. The microphone can be embedded in a device used to capture information and/or it can be an external device. For example, a mobile device such as a smart phone can be used to record an audio track along with physiological information.

The synchronizer 214 can use this audio information to facilitate in synchronizing the image information 204. In a typical scenario, the image information 204 can contain, but is not required to, both audio and visual information. Since the physiological information received from the sensor 206 is synchronized with the audio information 216, audio information from the image information 204 can be used to synchronize the image information 204 with the physiological information by using the audio tracks. This technique allows physiological information to be captured when convenient and later processed to determine the 'Best Moments' of the image information 204 (i.e., a subset of the image information).

One skilled in the art will appreciate that the system 200 illustrated in FIG. 2 can be an integrated or federated system. In other words, each block of FIG. 2 can be local and/or remote to other blocks of FIG. 2. For example, sensor 206 can be a ring located on a user's finger or embedded into a recording device and the like. Similarly, the emotions analyzer 208 and/or the image information editor 210 can reside on an editing device that allows post processing of gathered information.

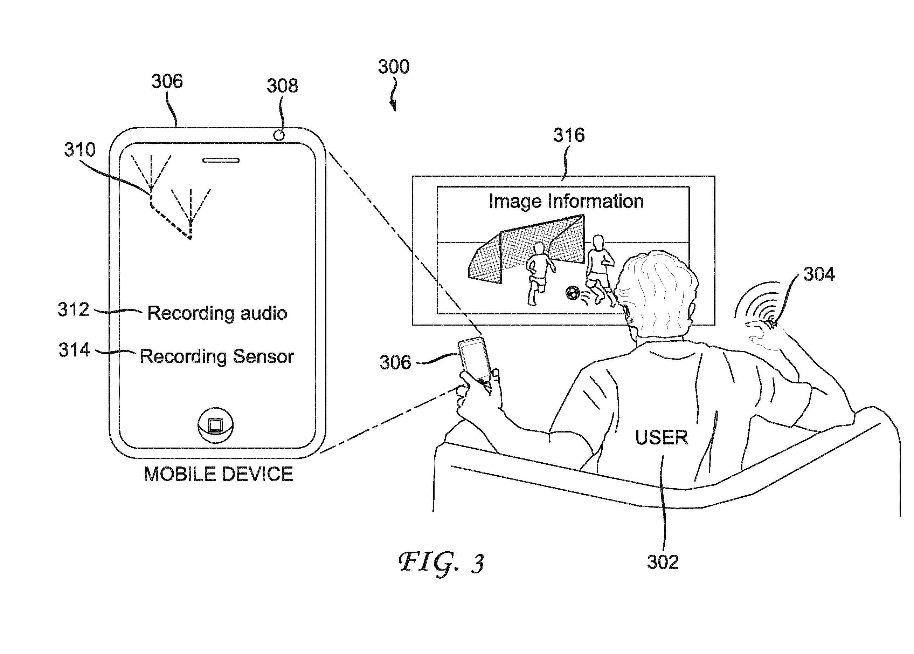

FIG. 3 further expounds upon an example use of a system 300 for editing image information in accordance with an embodiment of the present principles. This use example is not intended to limit the present principles in any manner. In this use example, a user 302 is wearing a sensor 304 in the form of a ring with a short range wireless communication means. The user 302 is using a mobile device 306 having an embedded microphone 308 and an embedded short range wireless communication means antenna 310 for interacting with the sensor 304 worn by the user 302. The user 302 and/or system 300 initiates a recording state on the mobile device 306 which shows the recording status, in this example, on the mobile device 306. "Recording Audio" 312 informs the user 302 that audio is being recorded. This could be ambient sounds being recorded and/or it could be pre-recorded sounds fed directly into the mobile device 306. The present principles do not limit the source of the audio for recording. "Recording Sensor" 314 informs the user 302 that sensor information is being recorded. In this example, the sensor information (physiological information) is being recorded wirelessly. However, it could also be recorded via a wired communication means as well. One skilled in the art will recognize that the status' 312, 314 can also be implemented in many different ways including recording status lights, sounds, etc. and can even not be shown to a user.

The user 302 views the image information 316 as the mobile device 206 records the audio and sensor information. Thus, it is easy for the user 302 to utilize the present principles while sitting for a lecture, watching a live event and/or watching a pre-recorded event where they do not have immediate access to the image information 316 (e.g., a movie theater) and/or where it is not practicable to record the image information 316 at that time. After the event producing the image information 316 is over, the user 302/system can process the captured physiological information. This can be triggered automatically by a system such as mobile device 306 when a user replays the image information on the device 306. The audio track recorded with the physiological information is used to synchronize with the audio track of the recorded image information. The audio synchronization permits further synchronizing of the physiological information to the image information 316 to align emotion information with the image information 316. When the physiological information is analyzed to determine what levels and/or types of emotions occur, the Best Moments of the image information 316 can be determined. The Best Moments (a subset of the image information 316) is then formed. The Best Moments can then be viewed and/or shared over a social network and the like. One skilled in the art can appreciate that a user and/or image information itself can influence the outcome of the edited image information (Best Moments). Thus, for example, friends can share their Best Moments of the same image information but with each user possibly having different edited image information in their Best Moments.

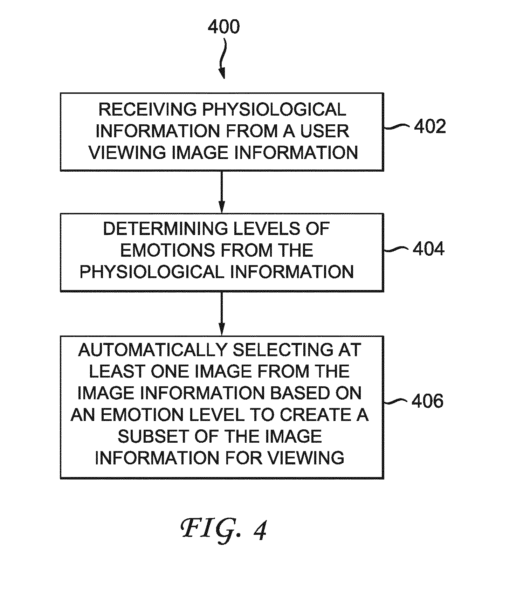

In view of the exemplary system shown and described above, methodologies that can be implemented in accordance with the embodiments will be better appreciated with reference to the flow chart of FIG. 4. While, for purposes of simplicity of explanation, the methodologies are shown and described as a series of blocks, it is to be understood and appreciated that the embodiments are not limited by the order of the blocks, as some blocks can, in accordance with an embodiment, occur in different orders *and*/*or* concurrently with other blocks from that shown and described herein. Moreover, not all illustrated blocks may be required to implement the methodologies in accordance with the embodiments.

FIG. 4 is a flow diagram of a method 400 of editing image information in accordance with an embodiment of the present principles. Physiological information from a user viewing the image information is first received 402. As noted above, the physiological information can be obtained from a sensor or sensors worn by a user, adhered to a user, embedded in a user's clothing, and/or grasped by a user (e.g., holding a device such as a recording device, smart phone, tablet, etc. can allow embedded sensors to read a user's physiological information, etc.) and the like. Levels of emotions are then determined from the physiological information 404. Levels of emotions can be further qualified by implementing different sensor types that allow types of emotions to be determined as well. At least one image from the image information is automatically selected based on an emotion level to create a subset of the image information for viewing 406. Emotion types can also be utilized to facilitate in determining the creation of the subset of the image information. Additionally, the physiological information can be synchronized with the image information. Synchronization can be utilized when image information may not be readily available at the time of capturing/receiving sensor related information such as physiological information. If, for example, audio tracks are recorded along with the physiological information, it can be used to help synchronize the physiological information with the image information at a later time.

What has been described above includes examples of the embodiments. It is, of course, not possible to describe every conceivable combination of components or methodologies for purposes of describing the embodiments, but one of ordinary skill in the art can recognize that many further combinations and permutations of the embodiments are possible. Accordingly, the subject matter is intended to embrace all such alterations, modifications and variations. Furthermore, to the extent that the term "includes" is used in either the detailed description or the claims, such term is intended to be inclusive in a manner similar to the term "comprising" as "comprising" is interpreted when employed as a transitional word.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, an optical disc (such as, for example, a CD also known as a compact disc and/or a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A system for editing image information, comprising:
means for receiving physiological information associated with a user viewing image information and determining at least one level of emotion from the physiological information (208); and
means for automatically selecting at least one image from the image information based on an emotion level to create a subset of the image information for viewing (210).

2. The system of claim 1, further comprising:
means for correlating the physiological information with the image information (214).

3. The system of claim 2, wherein the means for correlating the physiological information to the image information uses audio information recorded with the physiological information.

4. The system of claim 3, wherein the means for correlating the physiological information is accomplished by correlating an audio track associated with the image information to the audio information recorded with the physiological information.

5. The system of claim 1, further comprising:
means for receiving physiological information from a user viewing the image information, wherein the means communicates the physiological information to the system in real time or at a subsequent time (206).

6. The system of claim 5, wherein the means for receiving comprises at least one selected from the group of a galvanic skin response sensor and a photoplethysmogram sensor.

7. The system of claim 5, wherein means for receiving is a mobile device with physiological data recording and audio recording capabilities that allows subsequent synchronization and emotion level determination.

8. The system of claim 1, wherein the subset of image information is transmitted to a social network.

9. A method for editing image information, comprising:
receiving physiological information from a user viewing the image information (402);
determining at least one level of emotion from the physiological information (404); and
automatically selecting at least one image from the image information based on an emotion level to create a subset of the image information for viewing (406).

10. The method of claim 9, further comprising:
synchronizing the physiological information with the image information.

11. The method of claim 9, wherein the synchronizing the physiological information to the image information is accomplished using audio information recorded with the physiological information.

12. The method of claim 11, wherein the synchronizing the physiological information is accomplished by synchronizing an audio track associated with the image information to the audio information recorded with the physiological information.

13. The method of claim 9, wherein the physiological information comprises at least one selected from the group of a galvanic skin response data and a photoplethysmogram data.

14. The method of claim 13, wherein the physiological information is received wirelessly.

15. The method of claim 9, further comprising:
transmitting the subset of image information to a social network.
